# EUROPEAN PATENT SPECIFICATION

(11) **EP 4 587 978 B1**
(45) Date of publication and mention of the grant of the patent: **02.12.2026**
(21) Application number: 23783193.8
(22) Date of filing: 12.09.2023
(51) Int. Cl.: G06Q 10/02, G06N 20/00, G06Q 10/04, G06Q 10/0631, G06Q 30/0201, G06Q 30/0202, G06Q 50/12

(54) **SYSTEMS AND METHODS FOR MONITORING AND PREDICTING GUEST OCCUPANCY**
SYSTEME UND VERFAHREN ZUR ÜBERWACHUNG UND VORHERSAGE DER GASTBELEGUNG
SYSTÈMES ET PROCÉDÉS POUR SURVEILLER ET PRÉDIRE UNE OCCUPATION D'INVITÉ

(30) Priority: 14.09.2022 US 202217945033
(43) Date of publication of application: 23.07.2025
(73) Proprietor: Universal City Studios LLC, Universal City, CA 91608 (US)
(72) Inventor: HALL, Gregory Shellman, Orlando, Florida 32819 (US); ROWAN, Jaimee Helene, Orlando, Florida 32819 (US); BOESSEL, Thomas Michael, Orlando, Florida 32819 (US)
(74) Representative: Keltie LLP
(86) International application number: PCT/US2023/032558
(87) International publication number: WO 2024/059082

(56) References cited:
- AU-A1- 2022 200 063
- US-A1- 2022 101 410

## Description

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In a restaurant or dining hall facility, a guest may place an order at an ordering station (e.g., kiosk, register) and navigate through a dining environment to select a table for their dining experience. However, certain tables within the dining environment may be more desirable than others due to their location. For example, tables near windows may be more desirable than tables near a station. In some cases, environmental factors (e.g., roller coasters, sunlight) may change the desirability of the table. For example, sunlight streaming through windows may change highly desirable tables into less desirable tables during certain times of a day. As such, it is presently recognized that it may be beneficial to monitor guest movement within the dining environment to understand guest preferences and predict future guest occupancy.

Australian patent publication AU 2022 200 063 A1 describes a computing system for optimizing and allocating bookings within one or more spaces in a venue. The computing system comprises an allocation module including an optimization algorithm in communication with a processor. The allocation module is arranged to receive at least one booking request for a table or table combination and communicate with a database of other saved booking requests. The allocation module is also arranged to retrieve the saved booking requests and combine the at least one booking request with the saved booking requests to form a pool of requests, retrieve constraint information and iteratively allocate each of the requests from the pool of requests to a table or table combination utilizing the constraint information. An optimized allocation instruction set of allocated bookings is produced..

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In an embodiment, a seat occupancy system may include at least one sensor, of a plurality of sensors, configured to output sensor data indicative of a respective guest occupancy parameter for each seat of a plurality of seats within a dining environment, at least one sensor, of the plurality of sensors, configured to output additional sensor data indicative of one or more environment factors, at least one processor, and memory storing instructions executable by the at least one processor. The instructions cause the at least one processor to: receive the sensor data and additional sensor data; determine one or more environment factors that impact the dining environment; and receive a map indicative of a first layout of the dining environment comprising respective locations for each seat of the plurality of seats and a respective location for a show effect. The instructions further cause the at least one processor to determine that the respective guest occupancy parameter for at least one seat of the plurality of seats does not match a target guest occupancy parameter over a period of time with the first layout of the dining environment based on the sensor data; and in response, generate a second layout of the dining environment comprising a new respective location for the show effect, wherein the second layout is different from the first layout.

In an embodiment, a method of operating a seat occupancy system includes: receiving, using at least one processor, sensor data captured by at least one sensor of a plurality of sensors and indicative of a respective guest occupancy parameter for each seat of a plurality of seats within a dining environment; and receiving, using the at least one processor, additional sensor data captured by at least one sensor of the plurality of sensors and indicative of one or more environmental factors . The method also comprises determining one or more environmental factors that impact the dining environment. The method also comprises generating or accessing, using the at least one processor, a map indicative of a first layout of the dining environment and comprising a respective location of each seat of the plurality of seats, and a respective location of a show effect within the dining environment. The method further comprises instructing, using the at least one processor, generation of the show effect at the respective location of the show effect to diminish or enhance the one or more environmental factors. The method further comprises determining that the respective guest occupancy parameter for at least one seat of the plurality of seats does not match a target guest occupancy parameter over a period of time with the first layout of the dining environment based on the sensor data; and in response, generating, using the at least one processor a second layout of the dining environment comprising a new respective location for the show effect. The second layout is different from the first layout.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an embodiment of a seat occupancy system that may be used in a dining environment, in accordance with an aspect of the present disclosure;
FIG. 2 is a schematic illustration of the seat occupancy system of FIG.1 monitoring a location of the guest within the dining environment, in accordance with an aspect of the present disclosure;
FIG. 3 is a schematic illustration of a layout of the dining environment that may be generated by the seat occupancy system of FIG. 1, in accordance with an aspect of the present disclosure;
FIG. 4 is a flowchart of an embodiment of a process for designing the dining environment using the seat occupancy system of FIG. 1, in accordance with an aspect of the present disclosure; and
FIG. 5 is a flowchart of an embodiment of a process of operating the seat occupancy system of FIG. 1, in accordance with an aspect of the present disclosure.

### DETAILED DESCRIPTION

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The present disclosure generally relates to systems and methods for a seat occupancy system for a dining environment. The seat occupancy system may include at least one sensor that generates sensor data about the dining environment and at least one processor to analyze the sensor data. Within the dining environment, guests may prefer certain seats or certain areas, such as seats next to windows over seats next to an entrance or exit. Over time, sensor data may be gathered and analyzed to determine trends of guest preferences. Further, the sensor data may be used to redesign the dining environment, design a new dining environment, or provide show effects within the dining environment.

For example, the sensor data may be used to redesign the dining environment such that placement of tables and chairs improves guest dining experiences. In another example, the sensor data may be used to design a new dining environment such that placement of tables, chairs, windows, doorways, and so forth are optimized for guest dining experiences. Still in another example, the sensor data may be used to place show effects within the dining environment to provide a unique dining experience for the guests.

Present embodiments may be superior to traditional dining environments because present embodiments are tailored to guest preferences. The seat occupancy system may include sensors uniquely placed within the dining environment and the system may process the sensor data to determine patterns or trends in the sensor data over time. For example, the seat occupancy system may use the sensor data to train a machine learning model and provide redesign recommendations or alternative layouts for the dining environment based on guest preferences. Further, the seat occupancy system may filter certain sensor data (e.g., duplicated sensor data) to increase processing efficiency and/or the system may periodically delete sensor data to prevent a database from being full. Indeed, understanding guest preferences may create a unique dining experience for the guest.

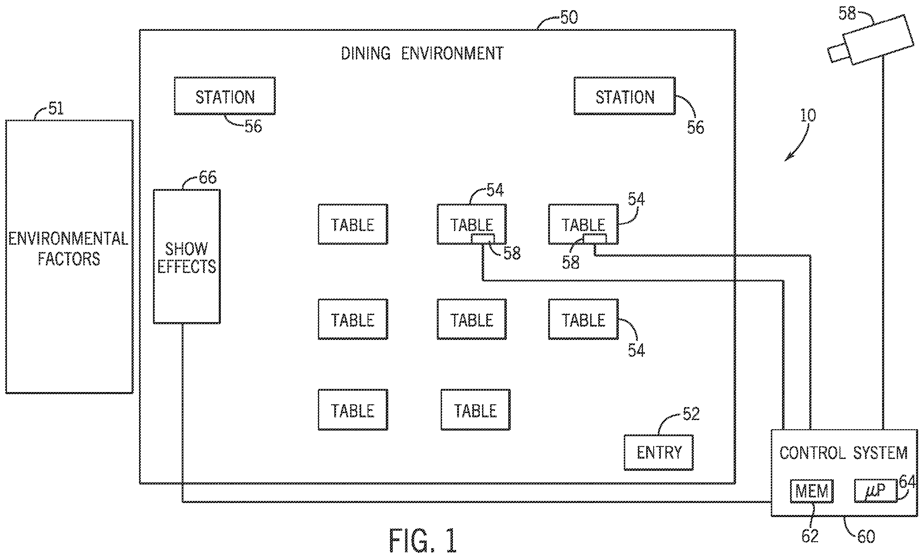

With the preceding in mind, FIG. 1 is a schematic diagram of an embodiment of a seat occupancy system 10 that may be used within a dining environment 50, such as a restaurant, a food hall, a food court, a dining hall, an amusement park, a cruise ship, or the like. The dining environment 50 may include an open space, such as a walkable area where guests may stand in a queue or line, place an order, select a table(s) 54, visit a station(s) 56, and/or otherwise navigate through the dining environment 50. The dining environment 50 may include an entry 52 (e.g., an entrance and/or exit; a doorway) for the guests to enter or leave the dining environment 50. Near the entry 52, the guests may create an order (e.g., via a point of sale terminal, register, server) at a vendor of the dining environment 50. Then, the guests may navigate through the dining environment 50 to select a table 54 for their dining experience.

However, the dining environment 50 may be influenced or affected by environmental factors 51 that may be external to and/or uncontrollable by the dining environment 50. For example, the environmental factors 51 may include light, sound, temperature, air flow, vibration, weather events (e.g., rain, wind, snow, cloud cover), or the like that may impact certain areas of the dining environment 50 at certain time periods. It should be appreciated that the environmental factors 51 may be created by natural events (e.g., sunlight) and/or machines (e.g., light emitters, speakers, air conditioning systems). Indeed, in one example, the environmental factors 51 may be created by vehicles (e.g., train, plane, car) traveling by the dining environment 50 and/or facilities adjacent to the dining environment 50. For example, the dining environment 50 may be located near an airport, and planes may generate noise throughout the day. In another example, the dining environment 50 may be located adjacent to a rollercoaster, and ride vehicles may periodically pass by the dining environment 50. The ride vehicles may be visible through a window of the dining environment 50 to provide entertainment to the guests in the dining environment 50, but certain environmental factors 51 (e.g., vibration, noise) from the ride vehicles may be experienced within the dining environment 50.

When selecting the table 54, the guest may take the environmental factors 51 and the location of the table 54 into consideration. That is, the guest may determine certain tables 54 to be more desirable than others, referred herein to as "guest preferences." The tables 54 may include or be associated with one or more seats, which may be movable chairs (e.g., not secured to a ground or to the tables 54) and/or stationary chairs (e.g., bolted or fastened to a ground or to the tables 54; picnic benches, metal chairs, wooden chairs). In an embodiment, the guests may visit the stations 56, which may be temporary locations that the guests visit, typically before or after selecting the tables 54. The stations 56 may include a restroom, a hand sanitizing station, a condiment station, a utensil station, a trash station, a drink fountain, or the like. For example, the guests may visit the condiment station to get ketchup, barbeque sauce, salt, pepper, or the like before occupying the tables 54. The guests may also visit the restroom before sitting at the tables 54.

In some instances, at least one sensor 58 coupled to a respective table 54 and/or a respective seat may detect guest occupancy. The sensor 58 may be coupled to a top surface of the table 54 (e.g., relative to the guest), a bottom surface of the table 54 (e.g., toward the floor), integrated within the table 54, or a combination thereof. For example, the sensor 58 integrated within the table 54 may receive a weight from personal possessions, items from the order, or a combination thereof that indicates guest occupancy. Additionally or alternatively, the sensor 58 may be coupled to the seat, such as on a top surface of the seat, a bottom surface of the seat, a backside of the seat, integrated within the seat, or a combination thereof. For example, when the guest sits in the seat, the sensor 58 may output a sensor signal indicative of guest occupancy.

The sensors 58 may include a pressure sensor, a weight sensor, a light sensor, a microphone, a temperature sensor, a flow meter, a motion sensor, a position sensor, a camera, or any combination thereof to generate sensor data regarding guest occupancy within the dining environment 50. In certain instances, the sensor data may be binary (e.g., 0, 1) to reduce complexity, thereby reducing false positives or an amount of time and processing power utilized to analyze the sensor data. For example, the sensors 58 may include a weight sensor integrated with the seat such that when the guest occupies the seat, the sensor data includes a 1, and when the seat is empty, the sensor data includes a 0. In other instances, the sensor data may include numerical values, images, or the like. For example, the sensors 58 may include the light sensor configured to detect light and/or characteristics of the light (e.g., brightness, color) at the table 54 and/or the seat. The sensors 58 may include the microphone configured to detect sound and/or characteristics of the sound (e.g., volume, pitch) at the table 54 and/or the seat. The sensors 58 may include the temperature sensor configured to measure a temperature at the table 54 and/or the seat. The sensors 58 may include the flow meter configured to measure an air flow at the table 54 and/or the seat. The sensors 58 may include the motion sensor (e.g., accelerometer) configured to detect a movement of the table 54 and/or the seat (e.g., by the guest; vibrations induced by nearby vehicles). The sensors 58 may include the position sensor (e.g., global positioning sensor system) that provides respective positions of the table 54 and/or the seat in a coordinate system (e.g., global coordinate system; relative coordinate system), which may be mapped to and/or coordinated with other structures (e.g., walls, the entry 52) in the dining environment 50. The sensors 58 may include one or more cameras configured to capture image data (e.g., images or imagery) of the dining environment 50 over time. One or more cameras configured to capture additional image data may be positioned at other locations around the dining environment 50 (e.g., mounted to a ceiling or walls). Thus, the image data may include image(s) taken initially (e.g., when the guest arrives in the dining environment 50) and image(s) taken over time to monitor movement of the guest within the dining environment 50. To track a movement of the guest, the image data may include one or more attributes of the guest, such as hair color, a clothing color, a gait, a personal item, an accessory, or the like to track movement of the guest within the dining environment 50. Further, the camera may operate in the visible light spectrum, the infrared (IR) spectrum, or the ultra-violet (UV) spectrum. In this way, the sensor data may track movement of guests within the dining environment 50 without tracking personally identifiable information (PII) of the guest.

In certain instances, the sensors 58 may be positioned or integrated throughout the dining environment 50 to monitor the environmental factors 51 and/or other properties, such as electricity usage, related to operation of the dining environment 50. For example, the sensors 58 may track electrical usage of an air conditioning system, a lighting system, or the like. The electrical usage may be analyzed in combination with the environmental factors 51 for energy conservation methods. In this way, the seat occupancy system 10 may have or provide a complete understanding of the dining environment 50.

The sensors 58 may transmit the sensor data to a control system 60 for processing (e.g., image analysis, machine learning, artificial intelligence, computer vision). The sensors 58 may be communicatively coupled to the control system 60 by wired or wireless connections. For example, the sensor 58 may be communicatively coupled via Bluetooth, Wi-Fi, or other suitable wireless connections to the control system 60. In the illustrated example, the sensors 58 may be communicatively coupled by one or more wires to the control system 60. To facilitate discussion of the figures, only certain connections may be illustrated.

The sensors 58, the control system 60, and a show effects 66 may form or be part of the seat occupancy system 10. In operation, the seat occupancy system 10 generates and processes the sensor data of the dining environment 50 to monitor guest occupancy and identify one or more guest preferences (e.g., trends or patterns in the guest occupancy). For example, the sensor data (e.g., a training set of the sensor data; historical sensor data) may be used to train a machine learning model stored within the control system 60 and/or the sensor data (e.g., additional sensor data) may be used to update the machine learning model over time. Indeed, the control system 60 may utilize machine learning algorithms or artificial intelligence to understand and/or make predictions related to the one or more guest preferences in the dining environment 50 (e.g., desirable or less desirable tables, desirable temperatures, a location for show effects). For example, the control system 60 may utilize the machine learning algorithms trained with historical sensor data and/or modeled data representative of the dining environment 50 to understand patterns of human behavior for selecting the table 54 and/or for leaving the table 54. In another example, the seat occupancy system 10 may utilize the machine learning algorithms that are trained with historical sensor data and/or modeled data representative of other dining environments 50 (e.g., at least 10, 100, 500, or more dining environments 50) to design and/or optimize the dining environment 50, other dining environments 50, and/or future dining environments 50, including generation of show effects 66 in certain areas of the dining environments 50.

The control system 60 may include a memory 62 and one or more processors 64 (e.g., processing circuitry). The memory 62 may include volatile memory, such as random-access memory (RAM), and/or non-volatile memory, such as read-only memory (ROM), optical drives, hard disc drives, solid-state drives, or any other non-transitory computer-readable medium that includes instructions to operate the seat occupancy system 10. The memory 62 may also include historical sensor data collected over time, predictions of guest preferences, condition data (e.g., weather reports), a map (e.g., facility map of the dining environment 50), patterns of human behavior, machine learning algorithms, and/or other types of information for the control system 60. The processor 64 may be configured to execute the instructions. For example, the processor 64 may include one or more application specific integrated circuits (ASICs), one or more field programmable gate arrays (FPGAs), one or more general purpose processors, or any combination thereof. The control system 60 may be a distributed computing system that contains one or more processors and/or one or more cloud computing systems having one or more processors.

The dining environment 50 may include show effects 66 that create a unique dining experience. For instance, the show effects 66 may include a performance (e.g., by human performers in costumes and/or by animated robotic characters), lighting effects, visual effects, movement effects, smoke effects, audio effects, a movable object (e.g., a robotic object), and the like. In an embodiment, the show effects 66 may include a show or a performance contained within an area (e.g., on a stage) of the dining environment 50. The show effects 66 may also include audio played throughout the dining environment 50, such as forest sounds, weather sounds, vehicle sounds, spoken words that provide a narrative, or the like. In an embodiment, at least some of the show effects 66 may be integrated within the tables 54, the seats, or a combination thereof. For example, the show effects 66 may be integrated within the seats causing the seats to vibrate. In another example, the show effects 66 include lights, speakers, haptic devices, fluid (e.g., water) dispensers, or the like integrated within the tables 54 and/or the seats to provide entertainment to the guests.

The control system 60 may set, adjust, and/or change one or more parameters of the show effects 66, such as to control an appearance of the performance, an appearance of the lighting effects, an appearance of the visual effects, a volume of the audio effects, an intensity of the movement effects, or a combination thereof. As an example, the control system 60 may operate to cause the show effects 66 to activate in parallel (e.g., at the same time) with the environmental factors 51. For example, the dining environment 50 may be located adjacent to a roller coaster such that the environmental factors 51 are generated in an area of the dining environment 50 when a ride vehicle passes the dining environment 50. The show effects 66 may be intended to enhance (e.g., vibrations to make passage of a ride vehicle more intense) or to cancel out the environmental factors 51 (e.g., a white noise to reduce noisy environmental factors 51). The control system 60 may identify the area of the dining environment 50 (e.g., based on the historical sensor data and/or modeled data; using the machine learning algorithms) and generate appropriate show effects 66 within the area (e.g., also based on the historical sensor data and/or modeled data; using the machine learning algorithms). For example, the show effects 66 may include activation of haptic devices in the seats located in the area to cause the seats to vibrate and/or activation of lights within the table 54 to cause the lights to flicker. In this way, the guests may experience an interactive dining experience.

It should be appreciated that the appropriate show effects 66 may be determined using the machine learning algorithms, and in this way, the show effects 66 may be designed to encourage occupancy in the area. For example, the machine learning algorithms trained with the historical sensor data may generate outputs that indicate that certain show effects 66 in the area (e.g., an air flow generated by haptic devices) caused the guests to move to another table 54 outside of the area, to move their seat away from the air flow, to exit the dining environment 50, and/or some other negative impact on the guests (e.g., the guests ate less of their meals, such as indicated via the weight sensors and/or the images captured by the cameras; the guests made negative sounds and/or spoke negative words, as detected via the microphones and analyzed via keywords or natural language processing techniques; the guests remained at the table 54 for some amount of time outside of a desired time range, such as shorter or longer than the desired time range). However, the outputs may indicate that other show effects 66 in the area (e.g., vibration and/or flickering lights) resulted in the guests remaining at the table without moving their seat or some other positive impact on the guests (e.g., the guests ate more of their meals, such as indicated via the weight sensors and/or the images captured by the cameras; the guests made positive sounds and/or spoke positive words, as detected via the microphones and analyzed via keywords or natural language processing techniques; the guests remained at the table 54 for the desired time range).

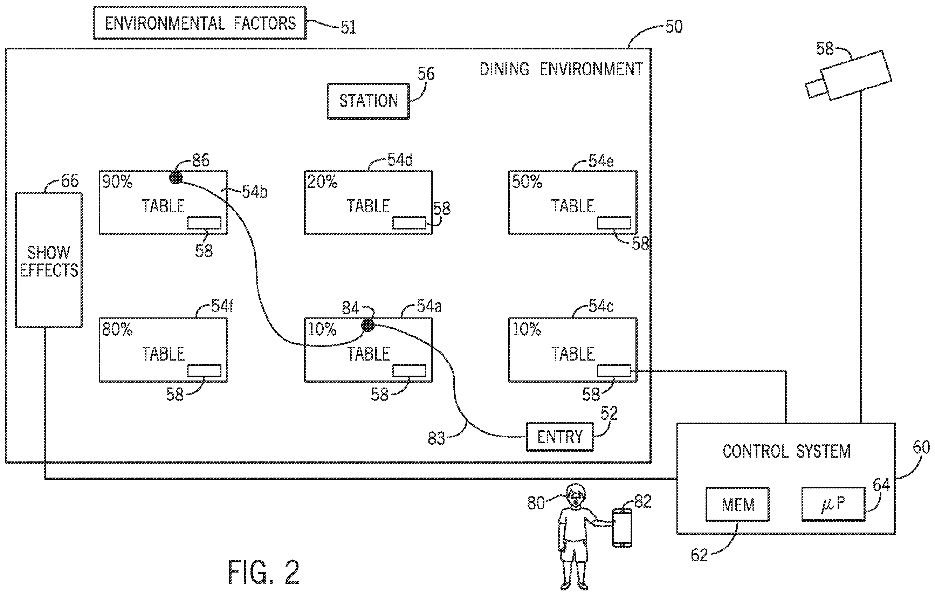

In another example, the show effects 66 may include a performance, and the control system 60 may control the lighting effects, the sound effects, and/or other interactive effects. Further, the control system 60 may monitor guest occupancy and related parameters during the performance to determine guest preferences, turnover rate, seat occupancy time, or the like. As further described with reference to FIG. 2, the seat occupancy system 10 may implement machine learning and/or computer vision techniques to understand patterns of human behavior and determine one or more guest preferences. In this way, the seat occupancy system 10 optimize a configuration of the dining environment 50. For example, the seat occupancy system 10 may generate and analyze sensor data to determine a new table arrangement, a different area of the dining environment 50 for show effects 66, a new layout for the dining environment 50, or the like.

Additionally or alternatively, the seat occupancy system 10 may be configured to provide real-time (e.g., real time or near real-time) information (e.g., graphical or visual representation of the sensor data via a display) to the guest and/or a vendor to facilitate operations of the dining environment 50. For example, the guest may use an application on their mobile device to access the seat occupancy system 10 to view real-time wait times for the dining environment 50, one or more open tables 54, or a combination thereof. The seat occupancy system 10 may store or have access to a map of the dining environment 50. The map of the dining environment 50 may include a schematic diagram, an image (e.g., still or moving image), or the like. Certain features of the map may be based on collected sensor data over time (e.g., placement of the tables 54 and the seats according to the sensor data). The map may associate objects within the dining environment 50 with a respective identifier, such as a letter, number, or a shape. For example, the tables 54 may be labeled A-F, respectively. Further, a seat of the tables 54 may be assigned a letter, number, or both. The seat occupancy system 10 may determine (e.g., based on the sensor data) and display dirty tables, empty tables, occupied tables, or a combination thereof to the vendor to optimize operations within the dining environment 50. The map may also associate occupancy parameters for each table 54 and/or seat, which may include a guest occupancy time, a guest throughput, a turnover rate, an average seat time per guest, a percentage of time for guest occupancy, or the like. For example, the seat occupancy system 10 may identify the percentage of time for guest occupancy for Table A as 50 percent and for Table B as 90 percent, which indicates that Table A is occupied 50 percent of business hours and Table B is occupied 90 percent of business hours. It should be appreciated that any other data or information described herein, or any other data or information that may be derived from the information described herein (e.g., other occupancy parameters, including occupancy parameters that are indicative of food consumption, such as a percentage of guests, for the table 54 and/or the seat, who completed their meals; and/or an average amount, such as by weight, of food consumed per guest at the table 54 and/or the seat) may be presented via the display. It should be appreciated that the map that is displayed to the guest and/or the vendor may include any of the details or formatting shown in FIGS. 1-3 (including any combination thereof).

It should be appreciated that the layout and arrangement of the dining environment in FIG. 1 is merely exemplary, and the seat occupancy system 10 may be used with any of a variety of dining environments that are arranged in any suitable manner. Moreover, certain components of the seat occupancy system 10 may be shared between/in communication with multiple dining environments 50 or may be dedicated to its own dining environment 50.

With the foregoing in mind, FIG. 2 is an example illustration of a guest 80 traveling within the dining environment 50. For example, the guest 80 may use a mobile device 82 (e.g., mobile phone) to create an order and select a table 54 within the dining environment 50. In another example, the guest 80 may create an order at a point-of-sale terminal located near the entry 52. The guest 80 may then enter and travel within the dining environment 50 to select the table 54 (as illustrated by line 83). Still, in another example, the guest 80 may be guided to the table 54 by a host or a server of the dining environment 50. As described herein, the seat occupancy system 10 tracks movement of the guest 80 by one or more sensors 58 within the dining environment 50.

For example, the guest 80 may travel within the dining environment 50 along a pathway (as illustrated by the line 83). The guest 80 may sit at a first table 54a, as represented by a point 84. However, environmental factors 51 may influence the guest 80 to leave the first table 54a and move to a second table 54b. For example, sunlight streaming through a window may hit the first table 54a and cause the guest discomfort during the dining experience. In another example, the location of the first table 54a next to the entry 52 may result in noise resulting in an unpleasant dining experience. As such, the guest 80 may switch to the second table 54b (as represented by a point 86). In in embodiment, the second table 54b may located next to a particular type of structure, or away from another particular type of structure, which may be preferred by the guest 80. Patterns or trends in the sensor data over time (e.g., all guests move away from or avoid the first table 54a at a particular time of day during sunny weather) may indicate guest preferences, and the patterns or trends in the sensor data may be utilized to implement the machine learning techniques disclosed herein.

The seat occupancy system 10 may identify guest preferences by monitoring movement of the guest 80 within the dining environment 50. The seat occupancy system 10 may generate sensor data (via the sensors 58 coupled to the tables 54 and/or the seats) and analyze the sensor data to determine the occupancy parameters at each respective table 54 over time. For example, the sensor data may be indicative the guest occupancy time. The seat occupancy system 10 may determine a ratio or a percentage of time the table 54 is occupied compared to a total operation time (e.g., business hours) of the dining environment 50. In an embodiment, the seat occupancy system 10 may use the sensor data in combination with the map to determine one or more guest preferences. For example, the seat occupancy system 10 may determine low guest occupancy times for certain tables 54 located near high traffic areas, such as the entry 52 or the station 56. For example, a third table 54c located near the entry 52 may have a guest occupancy time of 10 percent. The seat occupancy system 10 may generate sensor data indicative of the guest 80 occupying the third table 54c for a period of time and compare the period of time to the total time of operation to determine the guest occupancy time of 10 percent. In another example, a fourth table 54d located near the station 56 may have a guest occupancy time of 20 percent. Guests may visit the station 56 before or after selecting the table 54 causing the station 56 to be a high traffic area. Guests may prefer not to have others walking around the table 54 or causing noise by the table 54. As such, the high traffic areas may result in low guest occupancy times.

In an embodiment, the seat occupancy system 10 may identify high guest occupancy times for certain tables 54 within the dining environment 50. For example, a fifth table 54e located away from the entry 52 may have a 50 percent guest occupancy time. The seat occupancy system 10 may identify the location of the fifth table 54e away from the entry 52 as a preference of the guest 80. In another example, a sixth table 54f may have an 80 percent guest occupancy time. The sixth table 54f may be located close to the window and the seat occupancy system 10 may determine window access as a guest preference. The guest occupancy time or other occupancy parameters may be correlated to a time of day, the environmental factors 51, the show effects 66, and so forth. For example, the first table 54a may have 10 percent occupancy during morning hours on sunny days (e.g., bright sunlight), may have 60 percent occupancy during morning hours on cloudy days, may have 80 percent occupancy during evening hours on sunny days, and so forth, may have 90 percent occupancy during a performance provided as one of the show effects 66, and so forth. However, the other tables 54 may demonstrate other guest occupancy times or other occupancy parameters under such conditions.

The seat occupancy system 10 may identify slower turnover rates for tables 54 near windows or in the center of the dining environment 50. Still, in an embodiment, the seat occupancy system 10 may utilize the map to identify larger or smaller tables (e.g., more or less seats, a size of the table) and associate the sensor data to determine the guest occupancy time. Further, the seat occupancy system 10 may be communicatively coupled to the point-of-sale terminals and/or the vendor to receive a signal indicative of guest orders and correlate certain order items with a higher or lower guest occupancy time or other occupancy parameters. For example, orders with pasta may correlate to higher guest occupancy times or better occupancy parameters since the item may take longer to make and/or longer to eat. In another example, orders with kids meals may correlate to lower guest occupancy times as a family may want to eat and move on quickly. By utilizing different types of sensor data, the seat occupancy system 10 may accurately understand the dining environment 50 and predict guest behaviors. Further, the patterns or trends in the sensor data over time (e.g., certain size tables and/or certain meals result in certain guest occupancy times or other occupancy parameters) may be utilized to provide outputs with recommendations. For example, one or more algorithms, such as one or more machine learning algorithms, may generate outputs with recommendations of placement of structures (e.g., the entry 52, the tables 54, the seats, the stations 56, the windows, the stage or other area for the show effects 66, output devices that generate the show effects 66), characteristics of structures (e.g., table sizes, size of the windows, brightness of light emitted by the light emitters, volume of sound emitted by the speakers, intensity of the haptic effects provided by the haptic devices), operational features of the dining environment 50 (e.g., meals offered), and so forth. The recommendations may include a map with a recommended or new layout for the dining environment 50. The recommendations may be determined and provided periodically (e.g., weekly, monthly, yearly) and/or in response to certain events, such as identifying at least one seat with negative or undesirable occupancy parameters (e.g., not match a target occupancy parameter).

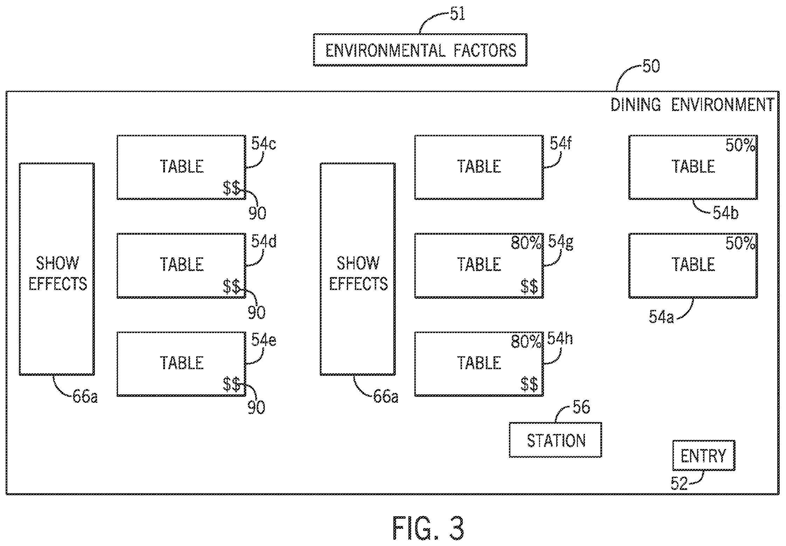

FIG. 3 is an example illustration of a layout of the dining environment 50 that may be generated by the seat occupancy system 10 based on the sensor data. For example, the seat occupancy system 10 may identify certain tables 54 with low guest occupancy times to integrate with the show effects 66 to increase desirability of the table 54 (and therefore, to increase the guest occupancy times). In another example, the seat occupancy system 10 may determine an area for the show effects 66 to increase desirability for certain tables 54. Still in another example, the seat occupancy system 10 may assign a price to certain desirable tables to generate additional revenue for the vendor.

In an embodiment, the seat occupancy system 10 may recommend a change in a current layout of the dining environment 50 based on the sensor data to improve the guest's dining experience. For example, tables 54 (e.g., tables 54a, 54b) located near high traffic areas may be moved away from the high traffic areas to increase guest occupancy time. Indeed, tables 54a, 54b may be located further away from the entry 52 as compared to the location of the third table 54c described with reference to FIG. 2 (based on the sensor data for the third table 54c in FIG. 2 and/or for other tables that indicates a suitable distance that results in desirable guest occupancy times or other desirable occupancy parameters). In another example, the station 56 may be adjacent to the entry 52, thereby containing high traffic areas to an area of the dining environment 50 (based on the sensor data indicating that this results in desirable guest occupancy times or other desirable occupancy parameters). In another example, the seat occupancy system 10 may identify an area of the dining environment 50 for the show effects 66a. For example, the show effects 66a may include a show or a performance to create an interactive dining experience for the guests. The seat occupancy system 10 may identify certain tables 54 (e.g., tables 54c, 54d, 54e) with low guest occupancy times or other undesirable occupancy parameters and place show effects 66a adjacent to the tables 54 to increase desirability. Indeed, guests with kids may desire tables 54c, 54d, 54e closer to the performance. Further, in an embodiment, the seat occupancy system 10 may assign a price 90 to the tables 54c, 54d, 54e as close proximity to the show effects 66a may increase desirability. The price 90 may vary with the occupancy parameters (e.g., a higher price for better occupancy parameters over time), and thus, the price 90 may account for any of the environmental factors 51 that affect desirability of certain tables 54.

In an embodiment, the seat occupancy system 10 may determine that the occupancy parameters may improve by adding the show effects 66 to tables 54 (e.g., tables 54f, 54g, 54h) located near the environmental factors 51. For example, the environmental factors 51 may include a roller coaster periodically passing by the dining environment 50. The show effects 66 may include flickering lights, vibrating seats, roller coaster sounds, or the like. The seat occupancy system 10 may generate the show effects 66 at a same time the roller coaster may pass by the dining environment 50. As such, guests may be entertained by the roller coaster and their dining experience may improve, which may be reflected in the occupancy parameters. Further, the seat occupancy system 10 may be communicatively coupled to one or more ride sensors and/or ride controllers of the roller coaster. By communicatively coupling to the ride sensors and/or the ride controllers of the roller coaster, the seat occupancy system 10 may receive signals that indicate a timing and a location of the roller coaster. Then, the seat occupancy system 10 may determine or predict which tables 54 and/or seats may benefit from the show effects 66 and also provide appropriate timing of the show effects 66. For example, as the ride vehicle passes the dining environment 50, certain tables and/or seats may experience the show effects 66 (e.g., based on their respective positions relative to the ride vehicle).

It may be beneficial to determine when the show effects 66 may be generated based on the occupancy parameters. For example, the seat occupancy system 10 may receive sensor data that indicates whether the table 54 is occupied by the guest. If the table 54 is occupied by the guest, then the seat occupancy system 10 may generate the show effects 66 at the table 54 or in the vicinity of the table 54 (e.g., lighting near the table 54, seats of the table 54). For example, a weight of the guest may muffle the show effects 66, such as a vibrating seat. As such, the show effects 66 may be noticeable to the guest, but not to surrounding guests. If the table 54 is not occupied by the guests, then the seat occupancy system 10 may not generate the show effects 66, because the show effects 66 may be distracting to other guests, such as creating noise due to the vibrating seat or flickering lights in peripheral vision areas of the other guests. Additionally or alternatively, the show effects 66 may wear down the table 54 and/or seat without guest occupancy over time, as such it may be beneficial for the seat occupancy system 10 to monitor guest occupancy within the dining environment 50 and selectively generate the show effects 66 based on the guest occupancy. Further, the dining environment 50 may conserve energy by selectively generating the show effects 66. The seat occupancy system 10 may also determine, via the machine learning techniques disclosed herein and based on the sensor data, that the show effects 66 should be provided at certain locations and/or at certain times. For example, the seat occupancy system 10 may determine that the show effects 66, or certain show effects 66 (e.g., the haptic effects in the seats), should only be provided to the guests within a time of being seated, during their meal, after their meal, and so forth to increase a likelihood of desirable occupancy parameters.

In an embodiment, the seat occupancy system 10 may design the dining environment 50 to optimize power usage within the dining environment 50. For example, the seat occupancy system 10 may utilize the sensor data to forecast a number of guests passing through the dining environment 50 during a period of time (e.g., hour, day, month, year) and optimize different energy systems to provide a different amount of energy (e.g., air conditioning, electricity). For example, summer months may be associated with high guest occupancy and high electricity use. However, during certain times of the day, such as mornings, guest occupancy may be low, as such energy usage may be reduced. In example, lunch times may be associated with high guest occupancy and the seat occupancy system 10 may increase electricity usage to improve the dining experience for the guests.

In an embodiment, the seat occupancy system 10 may design a layout for future dining environment(s) 50 with similar attributes. The attributes may include a type of vendor, a type of order, a maximum guest capacity (e.g., number of guests), guest preferences, a type of show effect 66, a type of environmental factors 51, or the like. For example, the future dining environments 50 with similar guest occupancy may be designed based on the sensor data obtained in one or more existing dining environments 50 to improve the guest's dining experience in the future dining environments 50. However, even if certain attributes are not similar, the seat occupancy system 10 may use machine learning to understand certain guest preferences, such as a preference to sit next to windows or a certain minimum distance away from trash cans, to design the future dining environments 50. Further, the seat occupancy system 10 may utilize certain show effects 66 with particular placement and/or timing informed by the sensor data obtained in the one or more existing dining environments and processed via machine learning to increase desirability of certain seats. In this way, the seat occupancy system 10 may design and optimize a layout for future dining environments 50 based on the sensor data.

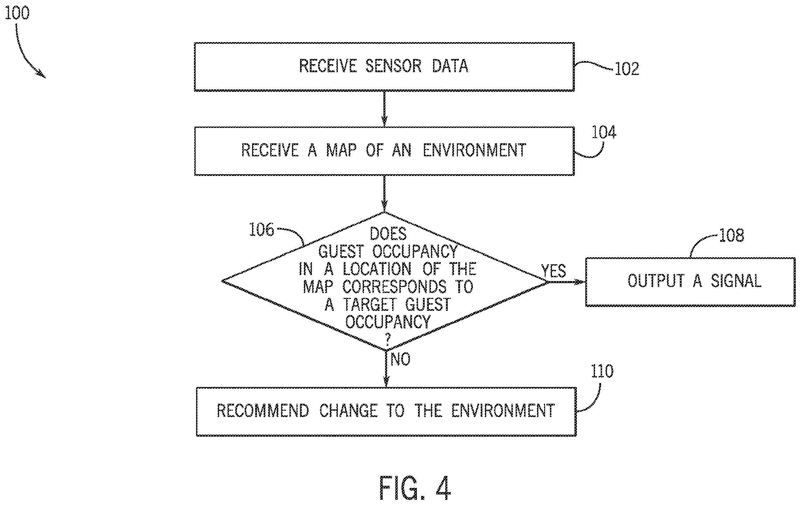

FIG. 4 is an example method 100 for designing the dining environment 50 using the seat occupancy system 10. At block 102, the control system 60 may receive sensor data indicative of guest occupancy within the dining environment 50. For example, the control system 60 may receive one or more sensor signal(s) indicative of occupied seats from the sensors 58 coupled to the tables 54 and/or the seats and/or from the sensors 58 positioned at other locations in the dining environment 50. The sensor signal may be a motion signal indicative of a seat being pulled by the guest followed by a pressure signal indicative of the guest sitting in the chair. The sensor signal may also be image data over time such that the seat occupancy system 10 may track movement of the guest within the dining environment 50 over time. Multiple, redundant sensor signals may accurately portray guest occupancy within the dining environment 50. Still in another example, the control system 60 may retrieve historical sensor data from the memory 62 indicative of past guest occupancy. The seat occupancy system 10 may be programmed with machine learning, artificial intelligence, or computer vision capabilities to interpret and understand the dining environment 50 based on the sensor data (e.g., real-time, historical).

At block 104, the seat occupancy system 10 may receive a map of the dining environment 50. For example, the map of the dining environment 50 may include a machine learning model representative of the dining environment 50 generated from the sensor data over time. In another example, the map may include real-time sensor data, thereby representing the current guest occupancy. Further, the map may include multiple different types of sensor data, such as pressure data from pressure sensors, motion data from motion sensors, weight data from weight sensors, image data from image sensors, light data from light sensors, audio data from microphones, temperature data from temperature sensors, air flow data from flow meters, position data from position sensors, or the like. The sensor data may also include or indicate environmental factors 51, such as sunlight in the dining environment 50 or roller coasters passing by the dining environment. Further, the sensor data may include energy usage of the dining environment 50. In this way, the map may provide a complete representation of the dining environment 50. The seat occupancy system 10 may receive and/or store the map of the dining environment 50 within the memory 62.

At block 106, the seat occupancy system 10 may analyze the sensor data to determine whether guest occupancy (e.g., guest occupancy parameters) in a location of the map corresponds to a target guest occupancy (e.g., target guest occupancy parameters). The seat occupancy system 10 may determine the guest occupancy based on the sensor data received at block 102 and the map received at block 104. The target guest occupancy may include a target number of guests that sit at a respective table 54 per day or other suitable parameter. The target guest occupancy may also include a target turnover rate, a threshold seat time, a threshold percentage of time the table and/or the seat is occupied, or the like. For example, the target guest occupancy may be a threshold percentage of time that the seat is occupied throughout the day, such as 20 percent, 30 percent, 40 percent, 50 percent, 60 percent, and so on. Still in another example, the target guest occupancy may be a number of times the table 54 is turned over per hour, such as 5, 6, 7, 8, and so on. In an embodiment, the seat occupancy system 10 may apply the target guest occupancy to all tables 54 within the dining environment 50. In an embodiment, seat occupancy system 10 may alter the target guest occupancy based on the location of the table 54 within the dining environment 50. For example, tables 54 located near entry 52 may have a lower target guest occupancy compared to tables 54 located near show effects 66.

If the usage in a location of the map corresponds to a target guest occupancy, at block 108, the seat occupancy system 10 may output a signal. For example, the seat occupancy system 10 may output a signal to a display of the vendor indicative of a message that the current layout of the dining environment 50 meets target guest occupancy. The signal may also include a graphical or visual representation of the map and indicate the guest occupancy for each table 54 and/or seat, and/or any other data or information disclosed herein. As such, the vendor may understand the dining environment operations and/or guest preferences within the dining environment 50.

If the guest occupancy in a location does not correspond to the target guest occupancy, then the seat occupancy system 10 may identify one or more alternative configurations of the dining environment 50. At block 110, the seat occupancy system 10 may recommend a change to the dining environment 50. The seat occupancy system 10 may use the sensor data to identify more or less desirable tables 54 and one or more guest preferences. Then, the seat occupancy system 10 may generate a different layout for the dining environment 50 by rearranging one or more tables 54, relocating the station 56, removing or adding the show effects 66, draw blinding at a pre-determined time, providing instructions dining operations, or a combination thereof. As discussed herein, the seat occupancy system 10 may use machine learning to make predictions of suitable changes that are expected to provide desirable guest occupancy (e.g., to match or correspond to the target guest occupancy; based on the sensor data) and to generate the recommendations based on the predictions.

Further, the seat occupancy system 10 may utilize the sensor data to create layouts for other dining environments 50 and/or future dining environments 50. In an example, the vendor may use a mobile device to access the seat occupancy system 10 to input one or more planned attributes of the future dining environment 50. For example, the vendor may input planned environmental factors 51, a target guest occupancy, an available building area/plot size, or the like. The seat occupancy system 10 may use the attributes, the sensor data (from one or more existing dining environments 50), and the map to generate a proposed layout for the future dining environment 50. For example, the seat occupancy system 10 may generate the proposed layout that includes an arrangement of the tables 54, the seats, the entry 52, the stations 56, and the show effects 66.

Accordingly, the seat occupancy system 10 may classify certain actions and/or combinations of actions taken by the guest, which may enable the seat occupancy system 10 to accurately determine guest preferences for designing a layout of the dining environment 50, including the future dining environments 50, with the show effects 66.

The method 100 may be carried out according to instructions stored on one or more tangible, non-transitory, machine-readable media and/or may be performed by the processor 64 or the processing circuitry of the control system 60 described herein or on another suitable controller. The blocks of the method 100 may be performed in any suitable order. Furthermore, certain blocks of the method 100 may be omitted and/or other blocks may be added to the method 100.

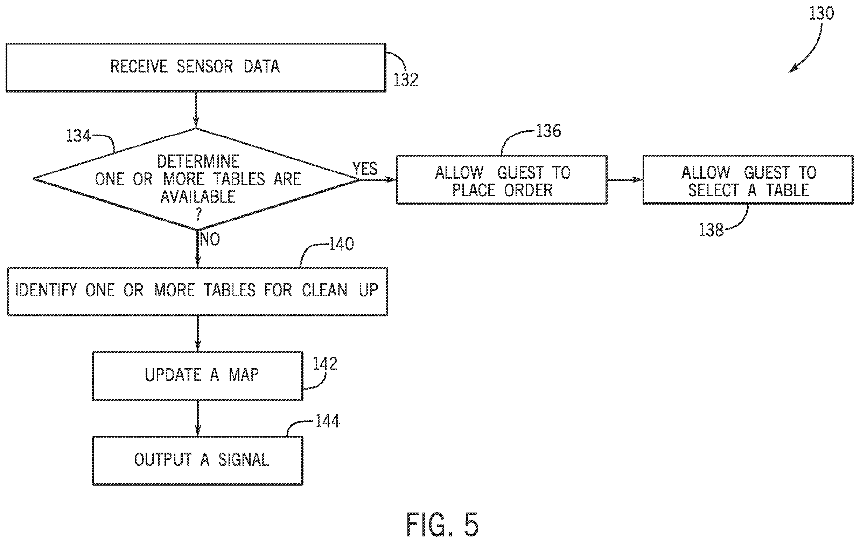

FIG. 5 is an example method 130 of operating the seat occupancy system 10 to provide a map of the dining environment 50 to the guests and/or the vendor. For example, the seat occupancy system 10 may generate a map for guests to create an order, reserve a seat, view a wait time, or the like. The seat occupancy system 10 may also generate a map for the vendor to optimize and/or to provide insight into dining operations. The guests and/or the vendor may access the map via an application on their mobile devices or other display system. The mobile devices are configured to display a graphical user interface (GUI) with a graphical or visual representation of the map.

To generate the map, at block 132, the seat occupancy system 10 may receive real-time sensor data of the dining environment 50. The sensor data may include image data of guests within the dining environment 50 (e.g., in queue, at a table, in a seat), weight data indicative of guest occupancy at the tables 54, pressure data indicative of guest occupancy at the tables 54, motion data indicative of movement of guests within the dining environment 50, or a combination thereof. For example, the sensors 58 may include a weight sensor integrated with a seat and configured to output a sensor signal indicative of weight on the seat. The sensors 58 may include a camera configured to output a sensor signal indicative of image data representative of the dining environment 50. In an embodiment, the seat occupancy system 10 may use the weight sensor signal and the image data to determine guest occupancy. For example, the weight sensor signal may be indicative of guest occupancy, but the image data may be indicative of a bag on the seat. In another example, the weight sensor signal may be indicative of a weight value and the seat occupancy system 10 may identify that the weight is below a threshold and therefore not indicative of guest occupancy.

At block 134, the seat occupancy system 10 may determine if one or more tables 54 may be available for guest occupancy. In an embodiment, the seat occupancy system 10 may use the map in combination with the sensor data to determine if one or more tables 54 are available. The seat occupancy system 10 may correlate each sensor signal with the respective table 54 and determine whether tables 54 may be unoccupied based on the sensor signal.

If one or more tables 54 are unoccupied, then at block 136, the seat occupancy system 10 may allow the guest to place an order. For example, the mobile device 82 may display the GUI with a graphical or visual representation of a menu of the vendor to allow the guest to order. The guest may select one or more items for their order and the seat occupancy system 10 may receive the input. Further, the seat occupancy system 10 may transmit the guest input to the vendor for order preparation. As such, wait time within the dining environment 50 may be reduced and dining operations may be optimized.

After the order is placed, at block 138, the seat occupancy system 10 may allow the guest to select a table for their dining experience 50. For example, the mobile device 82 may display the GUI with the map including one or more tables 54 labeled as open or occupied. The seat occupancy system 10 may cause the GUI to display a graphical or visual representation of the dining environment 50, marking premium tables with special show effects, premium tables closest to the show effects, empty or occupied tables, one or more high traffic tables, or the like. If the table is open, then the seat occupancy system 10 may cause the GUI to allow the guest to input a request to book the table. In an embodiment, the guest may select the table 54 to book and the seat occupancy system 10 may receive the guest input.

In an embodiment, the seat occupancy system 10 may not identify one or more open tables 54 for guest occupancy. As such, the seat occupancy system 10 may cause the GUI to display a wait time and message asking the guest if they would like to join a waitlist.

To free up tables, the seat occupancy system 10 may provide instructions for one or more dining operations to the vendor. It may be beneficial for the vendor to keep track of guest occupancy to optimize dining operations. For example, the seat occupancy system 10 may cause a graphical user interface of the mobile device associated with the vendor to display the map with real-time sensor data. The sensor data may include image data of the dining environment 50 and one or more tables 54 labeled for clean-up. At block 140, the seat occupancy system 10 may identify one or more tables for clean-up, thereby freeing up a table 54 within the dining environment 50. In an embodiment, the vendor may assign an individual to clean-up the identified table 54 and input (via the GUI) the task.

At block 142, the seat occupancy system 10 may update the map with real-time (or near-real time) sensor data. For example, the table 54 may be cleaned, thereby opening a table 54 for guest occupancy. In an embodiment, the vendor may indicate to the seat occupancy system 10 that the table 54 is clean and ready for guest occupancy. In an embodiment, the seat occupancy system 10 may analyze sensor data (e.g., the image data; the weight data, such as the weight on a tabletop of the table 54) to identify the cleaned table. The seat occupancy system 10 may update the map based on the sensor data to reflect the cleaned table. In an embodiment, the seat occupancy system 10 may also update the map to reflect energy usage outputs, current wait times, orders received, or a combination thereof.

At block 144, the seat occupancy system 10 may output a signal indicative of the updated map. For example, the seat occupancy system 10 may update the map displayed on the display of the mobile device 82 of the guest and allow the guest to place an order. It should be appreciated that the method 130 may be carried out for multiple guests at the same time, at overlapping times, and/or at different times (e.g., as the multiple guests enter the dining environment 50, multiple tables 54 being cleaned).

The method 130 may be stored on one or more tangible, non-transitory, machine-readable media and/or may be performed by the processor 64 or the processing circuitry of the control system 60 described above or on another suitable controller. The steps of the method 130 may be performed in the order disclosed above or in any other suitable order. Furthermore, certain steps of the method may be omitted and/or other blocks may be added to the method 130.

As used herein, 'machine learning' and/or 'artificial intelligence' may refer to algorithms and statistical models that computer systems use to perform a specific task with or without using explicit instructions. For example, a machine learning process may generate a mathematical model based on a sample of clean data, known as "training data," in order to make predictions or decisions without being explicitly programmed to perform the task. The seat occupancy system 10 may generate (e.g., train and/or update, such as passively update) the model based on sensor data collected over time. In this way, the model may improve over time based on new sensor data collected over time. For example, the model may receive sensor data in order to provide outputs related to guest preferences and locations for show effects, and the sensor data may then also be used to update and refine the model.

It should be appreciated that the seat occupancy system may be adapted for environments other than dining environments, such as gaming environments, ride attractions with waiting queues, or the like. The technical effects of the systems and methods described herein include utilizing sensor data and/or historical sensor data to determine and provide dining environment layouts with show effects to create an interactive dining experience for guests. The dining environment layouts may be used to optimize a current dining environment or modified for future dining environments. Further, the systems and methods described herein provide real-time or near real-time maps of the dining environment. Such on demand and directed information may enable quick and easy access by the guest to create an order, select a table, and/or select a premium seat. Further, providing on demand information to a vendor may optimize dining operations, such as creating the order or cleaning a table.

While only certain features of the disclosure have been illustrated and described herein, many modifications and changes will occur to those skilled in the art. It should be appreciated that any features shown and described with reference to FIGS. 1-5 may be combined in any suitable manner.

The techniques presented and claimed herein are referenced and applied to material objects and concrete examples of a practical nature that demonstrably improve the present technical field and, as such, are not abstract, intangible or purely theoretical.

## Claims

1. A seat occupancy system (10), comprising:
at least one sensor (58), of a plurality of sensors (58), configured to output sensor data indicative of a respective guest occupancy parameter for each seat of a plurality of seats within a dining environment (50);
at least one sensor (58), of the plurality of sensors (58), configured to output additional sensor data indicative of one or more environmental factors;
at least one processor (64); and
memory (62) storing instructions executable by the at least one processor (64) to cause the at least one processor (64) to:
receive the sensor data and additional sensor data;
determine one or more environmental factors (51) that impact the dining environment (50);
receive a map indicative of a first layout of the dining environment (50) comprising respective locations for each seat of the plurality of seats and a respective location for a show effect (66);
instruct generation of the show effect (66) at the respective location to diminish or enhance one or more environmental factors (51);
determine that the respective guest occupancy parameter for at least one seat of the plurality of seats does not match a target guest occupancy parameter over a period of time with the first layout of the dining environment (50) based on the sensor data; and
in response, generate a second layout of the dining environment (50) comprising a new respective location for the show effect (66), wherein the second layout is different from the first layout.

2. The seat occupancy system (10) of Claim 1, wherein the map is indicative of a respective location for each environmental factor (51) of the one or more environmental factors (51), and the environmental factor (51) comprises noise, vibration, air flow, light, or any combination thereof.

3. The seat occupancy system (10) of Claim 2, wherein an environmental factor (51) of the one or more environmental factors (51) is caused by a ride vehicle in a vicinity of the dining environment (50), and the instructions are executable by the at least one processor (64) to cause the at least one processor (64) to generate the show effect (66) while the ride vehicle generates the environmental factor (51).

4. The seat occupancy system (10) of Claim 3, wherein the instructions are executable by the at least one processor (64) to cause the at least one processor (64) to:
identify guest vacancy of at least one seat of the plurality of seats based on the sensor data; and
block the show effect (66) in response to identifying the guest vacancy.

5. The seat occupancy system (10) of Claim 2, wherein the instructions are executable by the at least one processor (64) to cause the at least one processor (64) to adjust one or more characteristics of the show effect (66) based on the one or more environmental factors.

6. The seat occupancy system (10) of Claim 1, wherein the show effect (66) comprises vibrating the at least one seat of the plurality of seats.

7. The seat occupancy system (10) of Claim 1, wherein the show effect (66) comprises white noise or activation of lights.

8. The seat occupancy system (10) of Claim 1, wherein the instructions are executable by the at least one processor (64) to cause the at least one processor (64) to determine a respective price for each seat of the plurality of seats based on the respective guest occupancy parameter and the second layout.

9. The seat occupancy system of Claim 1, wherein the at least one sensor comprises a pressure sensor, a weight sensor, a motion sensor, a camera, or any combination thereof.

10. The seat occupancy system (10) of Claim 1, wherein the instructions are executable by the at least one processor (64) to cause the at least one processor (64) to:
identify one or more unoccupied seats of the plurality of seats; and
cause a display of a mobile device (82) of a guest to display a graphical user interface (GUI), the GUI comprising:
the second layout of the dining environment (50) with the one or more unoccupied seats of the plurality of seats; and
a virtual button that enables the guest (80) to place an order and select a table (54) associated with the one or more unoccupied seats of the plurality of seats.

11. The seat occupancy system (10) of Claim 1, wherein the instructions are executable by the at least one processor (64) to cause the at least one processor (64) to use one or more machine learning algorithms to generate the second layout based on the sensor data.

12. A method of operating a seat occupancy system (10), the method comprising:
receiving, using at least one processor (64), sensor data captured by at least one sensor (58) of a plurality of sensors (58) and indicative of a respective guest occupancy parameter for each seat of a plurality of seats within a dining environment;
receiving, using the at least one processor (64), additional sensor data captured by at least one sensor (58) of the plurality of sensors (58) and indicative of one or more environmental factors (51);
determining one or more environmental factors (51) that impact the dining environment;
generating or accessing, using the at least one processor (64), a map indicative of a first layout of the dining environment and comprising a respective location of each seat of the plurality of seats, and a respective location of a show effect (66) within the dining environment;
instructing, using the at least one processor (64), generation of the show effect (66) at the respective location of the show effect (66) to diminish or enhance the one or more environmental factors (51);
determining that the respective guest occupancy parameter for at least one seat of the plurality of seats does not match a target guest occupancy parameter over a period of time with the first layout of the dining environment (50) based on the sensor data; and
in response, generating, using the at least one processor (64) a second layout of the dining environment comprising a new respective location for the show effect (66), wherein the second layout is different from the first layout.

13. The method of Claim 12, comprising generating, via the at least one processor (64), the show effect (66) in parallel with at least one of the environmental factors (51).

14. The method of Claim 13, comprising determining, via the at least one processor (64), a guest (80) is sitting in a particular seat of the plurality of seats prior to generating the show effect (66) in a vicinity of the particular seat of the plurality of seats.

15. The method of Claim 13, comprising generating, using the at least one processor (64) and one or more machine learning algorithms, a further map representative of an additional recommended layout for another environment based on the sensor data, the additional sensor data, and the map.

## Patentansprüche

1. Sitzbelegungssystem (10), das Folgendes umfasst:
mindestens einen Sensor (58), von einer Vielzahl von Sensoren (58), der dazu konfiguriert ist, Sensordaten auszugeben, die einen jeweiligen Gästebelegungsparameter für jeden Sitz einer Vielzahl von Sitzen innerhalb einer Essumgebung (50) angeben;
mindestens einen Sensor (58), von der Vielzahl von Sensoren (58), der dazu konfiguriert ist, zusätzliche Sensordaten auszugeben, die einen oder mehrere Umgebungsfaktoren angeben;
mindestens einen Prozessor (64); und
einen Speicher (62), der Anweisungen speichert, die durch den mindestens einen Prozessor (64) ausführbar sind, um den mindestens einen Prozessor (64) zu Folgendem zu veranlassen:
Empfangen der Sensordaten und zusätzlichen Sensordaten;
Bestimmen eines oder mehrerer Umgebungsfaktoren (51), die die Essumgebung (50) beeinträchtigen;
Empfangen einer Karte, die ein erstes Layout der Essumgebung (50) angibt, das jeweilige Orte für jeden Sitz der Vielzahl von Sitzen und einen jeweiligen Ort für einen Show-Effekt (66) umfasst;
Anweisen der Generierung des Show-Effekts (66) an dem jeweiligen Ort, um einen oder mehrere Umgebungsfaktoren (51) zu verringern oder zu verstärken;
Bestimmen, dass der jeweilige Gästebelegungsparameter für mindestens einen Sitz der Vielzahl von Sitzen mit einem Gästebelegungszielparameter über einen Zeitraum mit dem ersten Layout der Essumgebung (50) nicht übereinstimmt, basierend auf den Sensordaten; und
als Reaktion, Generieren eines zweiten Layouts der Essumgebung (50), das einen neuen jeweiligen Ort für den Show-Effekt (66) umfasst, wobei sich das zweite Layout von dem ersten Layout unterscheidet.

2. Sitzbelegungssystem (10) nach Anspruch 1, wobei die Karte einen jeweiligen Ort für jeden Umgebungsfaktor (51) des einen oder der mehreren Umgebungsfaktoren (51) angibt und der Umgebungsfaktor (51) Rauschen, Vibration, Luftstrom, Licht oder eine beliebige Kombination davon umfasst.

3. Sitzbelegungssystem (10) nach Anspruch 2, wobei ein Umgebungsfaktor (51) des einen oder der mehreren Umgebungsfaktoren (51) durch ein Fahrgeschäftsfahrzeug in Nähe der Essumgebung (50) veranlasst wird und die Anweisungen durch den mindestens einen Prozessor (64) ausführbar sind, um den mindestens einen Prozessor (64) zu veranlassen, den Show-Effekt (66) zu generieren, während das Fahrgeschäftsfahrzeug den Umgebungsfaktor (51) generiert.

4. Sitzbelegungssystem (10) nach Anspruch 3, wobei die Anweisungen durch den mindestens einen Prozessor (64) ausführbar sind, um den mindestens einen Prozessor (64) zu Folgendem zu veranlassen:
Identifizieren einer Gästevakanz von mindestens einem Sitz der Vielzahl von Sitzen basierend auf den Sensordaten; und
Blockieren des Show-Effekts (66) als Reaktion auf das Identifizieren der Gästevakanz.

5. Sitzbelegungssystem (10) nach Anspruch 2, wobei die Anweisungen durch den mindestens einen Prozessor (64) ausführbar sind, um den mindestens einen Prozessor (64) zu veranlassen, ein oder mehrere Charakteristika des Show-Effekts (66) basierend auf dem einen oder den mehreren Umgebungsfaktoren anzupassen.

6. Sitzbelegungssystem (10) nach Anspruch 1, wobei der Show-Effekt (66) ein Vibrieren des mindestens einen Sitzes der Vielzahl von Sitzen umfasst.

7. Sitzbelegungssystem (10) nach Anspruch 1, wobei der Show-Effekt (66) weißes Rauschen oder eine Aktivierung von Lichtern umfasst.

8. Sitzbelegungssystem (10) nach Anspruch 1, wobei die Anweisungen durch den mindestens einen Prozessor (64) ausführbar sind, um den mindestens einen Prozessor (64) zu veranlassen, einen jeweiligen Preis für jeden Sitz der Vielzahl von Sitzen basierend auf dem jeweiligen Gästebelegungsparameter und dem zweiten Layout zu bestimmen.

9. Sitzbelegungssystem nach Anspruch 1, wobei der mindestens einen Sensor einen Drucksensor, einen Gewichtssensor, einen Bewegungssensor, eine Kamera oder eine beliebige Kombination davon umfasst.

10. Sitzbelegungssystem (10) nach Anspruch 1, wobei die Anweisungen durch den mindestens einen Prozessor (64) ausführbar sind, um den mindestens einen Prozessor (64) zu Folgendem zu veranlassen:
Identifizieren eines oder mehrerer unbelegter Sitze der Vielzahl von Sitzen; und
Veranlassen einer Anzeige einer mobilen Vorrichtung (82) eines Gasts, eine grafische Benutzerschnittstelle (GUI) anzuzeigen, wobei die GUI Folgendes umfasst:
das zweite Layout der Essumgebung (50) mit dem einen oder den mehreren unbelegten Sitzen der Vielzahl von Sitzen; und
eine virtuelle Taste, die dem Gast (80) ermöglicht, eine Bestellung zu platzieren und einen Tisch (54) zu selektieren, der mit dem einen oder den mehreren unbelegten Sitzen der Vielzahl von Sitzen assoziiert ist.

11. Sitzbelegungssystem (10) nach Anspruch 1, wobei die Anweisungen durch den mindestens einen Prozessor (64) ausführbar sind, um den mindestens einen Prozessor (64) zu veranlassen, einen oder mehreren Maschinenlernalgorithmen zu verwenden, um das zweite Layout basierend auf den Sensordaten zu generieren.

12. Verfahren zum Betreiben eines Sitzbelegungssystems (10), wobei das Verfahren Folgendes umfasst:
Empfangen, unter Verwendung mindestens eines Prozessors (64), von Sensordaten, die durch mindestens einen Sensor (58) einer Vielzahl von Sensoren (58) erfasst werden und einen jeweiligen Gästebelegungsparameter für jeden Sitz von einer Vielzahl von Sitzen innerhalb einer Essumgebung angeben;
Empfangen, unter Verwendung des mindestens einen Prozessors (64), von zusätzlichen Sensordaten, die durch mindestens einen Sensor (58) der Vielzahl von Sensoren (58) erfasst werden und einen oder mehrere Umgebungsfaktoren (51) angeben;
Bestimmen eines oder mehrerer Umgebungsfaktoren (51), die die Essumgebung beeinträchtigen;
Generieren oder Zugreifen auf, unter Verwendung des mindestens einen Prozessors (64), einer/eine Karte, die ein erstes Layout der Essumgebung angibt und einen jeweiligen Ort jeden Sitzes der Vielzahl von Sitzen und einen jeweiligen Ort eines Show-Effekts (66) innerhalb der Essumgebung umfasst;
Anweisen, unter Verwendung des mindestens einen Prozessors (64), der Generierung des Show-Effekts (66) an dem jeweiligen Ort des Show-Effekts (66), um den einen oder die mehreren Umgebungsfaktoren (51) zu verringern oder zu verstärken;
Bestimmen, dass der jeweilige Gästebelegungsparameter für mindestens einen Sitz der Vielzahl von Sitzen mit einem Gästebelegungszielparameter über einen Zeitraum mit dem ersten Layout der Essumgebung (50) nicht übereinstimmt, basierend auf den Sensordaten; und
als Reaktion, Generieren, unter Verwendung des mindestens einen Prozessors (64), eines zweiten Layouts der Essumgebung, das einen neuen jeweiligen Ort für den Show-Effekt (66) umfasst, wobei sich das zweite Layout von dem ersten Layout unterscheidet.

13. Verfahren nach Anspruch 12, das das Generieren, über den mindestens einen Prozessor (64), des Show-Effekts (66) parallel mit mindestens einem der Umweltfaktoren (51) umfasst.

14. Verfahren nach Anspruch 13, das das Bestimmen, über den mindestens einen Prozessor (64), dass ein Gast (80) in einem konkreten Sitz der Vielzahl von Sitzen sitzt, bevor der Show-Effekt (66) in Nähe des konkreten Sitzes der Vielzahl von Sitzen generiert wird.

15. Verfahren nach Anspruch 13, das das Generieren, unter Verwendung des mindestens einen Prozessors (64) und eines oder mehrerer Maschinenlernalgorithmen, einer weiteren Karte umfasst, die ein weiteres empfohlenes Layout für eine andere Umgebung basierend auf den Sensordaten, den zusätzlichen Sensordaten und der Karte repräsentiert.

## Revendications

1. Système de gestion de l'occupation de sièges (10), comprenant :
au moins un capteur (58), faisant partie d'une pluralité de capteurs (58), conçu pour produire des données de capteur indiquant un paramètre d'occupation par un visiteur respectif pour chaque siège d'une pluralité de sièges dans un environnement de restauration (50) ;
au moins un capteur (58), faisant partie de la pluralité de capteurs (58), conçu pour produire des données de capteur supplémentaires indiquant un ou plusieurs facteurs d'environnement ;
au moins un processeur (64) ; et
une mémoire (62) contenant des instructions pouvant être exécutées par l'au moins un processeur (64) afin d'amener l'au moins un processeur (64) à :
recevoir les données de capteur et les données de capteur supplémentaires ;
déterminer un ou plusieurs facteurs d'environnement (51) qui ont une incidence sur l'environnement de restauration (50) ;
recevoir une carte indiquant une première configuration de l'environnement de restauration (50) comprenant des emplacements respectifs pour chaque siège de la pluralité de sièges et un emplacement respectif pour un effet de spectacle (66) ;
émettre l'instruction de générer l'effet de spectacle (66) à l'emplacement respectif afin d'amoindrir ou d'amplifier un ou plusieurs facteurs d'environnement (51) ;
déterminer que le paramètre d'occupation par un visiteur respectif pour au moins un siège de la pluralité de sièges ne correspond pas à un paramètre cible d'occupation par un visiteur sur une certaine période avec la première configuration de l'environnement de restauration (50) sur la base des données de capteur ; et
en réponse, générer une seconde configuration de l'environnement de restauration (50) comprenant un nouvel emplacement respectif pour l'effet de spectacle (66), la seconde configuration étant différente de la première configuration.

2. Système de gestion de l'occupation de sièges (10) selon la revendication 1, dans lequel la carte indique un emplacement respectif pour chaque facteur d'environnement (51) parmi les un ou plusieurs facteurs d'environnement (51), et le facteur d'environnement (51) comprend du bruit, des vibrations, un flux d'air, de la lumière, ou une combinaison quelconque de ceux-ci.

3. Système de gestion de l'occupation de sièges (10) selon la revendication 2, dans lequel un facteur d'environnement (51) parmi les un ou plusieurs facteurs d'environnement (51) est provoqué par un véhicule de manège à proximité de l'environnement de restauration (50), et les instructions peuvent être exécutées par l'au moins un processeur (64) afin d'amener l'au moins un processeur (64) à générer l'effet de spectacle (66) pendant que le véhicule de manège génère le facteur d'environnement (51).

4. Système de gestion de l'occupation de sièges (10) selon la revendication 3, dans lequel les instructions peuvent être exécutées par l'au moins un processeur (64) afin d'amener l'au moins un processeur (64) à :
identifier l'absence d'un visiteur pour au moins un siège de la pluralité de sièges sur la base des données de capteur ; et
bloquer l'effet de spectacle (66) en réponse à l'identification de l'absence d'un visiteur.

5. Système de gestion de l'occupation de sièges (10) selon la revendication 2, dans lequel les instructions peuvent être exécutées par l'au moins un processeur (64) afin d'amener l'au moins un processeur (64) à ajuster une ou plusieurs caractéristiques de l'effet de spectacle (66) en fonction des un ou plusieurs facteurs d'environnement.

6. Système de gestion de l'occupation de sièges (10) selon la revendication 1, dans lequel l'effet de spectacle (66) comprend l'application de vibrations à l'au moins un siège de la pluralité de sièges.

7. Système de gestion de l'occupation de sièges (10) selon la revendication 1, dans lequel l'effet de spectacle (66) comprend un bruit blanc ou l'activation de lumières.

8. Système de gestion de l'occupation de sièges (10) selon la revendication 1, dans lequel les instructions peuvent être exécutées par l'au moins un processeur (64) afin d'amener l'au moins un processeur (64) à déterminer un prix respectif pour chaque siège de la pluralité de sièges sur la base du paramètre d'occupation par un visiteur respectif et de la seconde configuration.

9. Système de gestion de l'occupation de sièges selon la revendication 1, dans lequel l'au moins un capteur comprend un capteur de pression, un capteur de poids, un capteur de mouvement, une caméra, ou une combinaison quelconque de ceux-ci.

10. Système de gestion de l'occupation de sièges (10) selon la revendication 1, dans lequel les instructions peuvent être exécutées par l'au moins un processeur (64) afin d'amener l'au moins un processeur (64) à :
identifier un ou plusieurs sièges inoccupés parmi la pluralité de sièges ; et
provoquer l'affichage, par un écran d'un dispositif mobile (82) d'un visiteur, d'une interface utilisateur graphique (GUI), la GUI comprenant :
la seconde configuration de l'environnement de restauration (50) avec les un ou plusieurs sièges inoccupés parmi la pluralité de sièges ; et
un bouton virtuel qui permet au visiteur (80) de passer une commande et de choisir une table (54) associée aux un ou plusieurs sièges inoccupés parmi la pluralité de sièges.

11. Système de gestion de l'occupation de sièges (10) selon la revendication 1, dans lequel les instructions peuvent être exécutées par l'au moins un processeur (64) afin d'amener l'au moins un processeur (64) à utiliser un ou plusieurs algorithmes d'apprentissage automatique pour générer la seconde configuration sur la base des données de capteur.

12. Procédé de mise en œuvre d'un système de gestion de l'occupation de sièges (10), le procédé comprenant :
recevoir, au moyen d'au moins un processeur (64), des données de capteur acquises par au moins un capteur (58) d'une pluralité de capteurs (58) et indiquant un paramètre d'occupation par un visiteur respectif pour chaque siège d'une pluralité de sièges dans un environnement de restauration ;
recevoir, au moyen de l'au moins un processeur (64), des données de capteur supplémentaires acquises par au moins un capteur (58) de la pluralité de capteurs (58) et indiquant un ou plusieurs facteurs d'environnement (51) ;
déterminer un ou plusieurs facteurs d'environnement (51) qui ont une incidence sur l'environnement de restauration ;
générer ou consulter, au moyen de l'au moins un processeur (64), une carte indiquant une première configuration de l'environnement de restauration et comprenant un emplacement respectif de chaque siège de la pluralité de sièges, et un emplacement respectif d'un effet de spectacle (66) dans l'environnement de restauration ;
émettre l'instruction, au moyen de l'au moins un processeur (64), de générer l'effet de spectacle (66) à l'emplacement respectif de l'effet de spectacle (66) afin d'amoindrir ou d'amplifier les un ou plusieurs facteurs d'environnement (51) ;
déterminer que le paramètre d'occupation par un visiteur respectif pour au moins un siège de la pluralité de sièges ne correspond pas à un paramètre cible d'occupation par un visiteur sur une certaine période avec la première configuration de l'environnement de restauration (50) sur la base des données de capteur ; et
en réponse, générer, au moyen de l'au moins un processeur (64), une seconde configuration de l'environnement de restauration comprenant un nouvel emplacement respectif pour l'effet de spectacle (66), la seconde configuration étant différente de la première configuration.

13. Procédé selon la revendication 12, comprenant la génération, par le biais de l'au moins un processeur (64), de l'effet de spectacle (66) parallèlement à au moins un des facteurs d'environnement (51).

14. Procédé selon la revendication 13, comprenant la détermination, par le biais de l'au moins un processeur (64), qu'un visiteur (80) est assis sur un siège particulier de la pluralité de sièges avant de générer l'effet de spectacle (66) à proximité du siège particulier de la pluralité de sièges.

15. Procédé selon la revendication 13, comprenant la génération, au moyen de l'au moins un processeur (64) et d'un ou de plusieurs algorithmes d'apprentissage automatique, d'une autre carte représentant une configuration supplémentaire recommandée pour un autre environnement sur la base des données de capteur, des données de capteur supplémentaires et de la carte.
